(19) Europäisches Patentamt
European Patent Office
Office européen des brevets

(11) **EP 2 458 462 A2**

(12) **EUROPÄISCHE PATENTANMELDUNG**

(43) Veröffentlichungstag:
**30.05.2012 Patentblatt 2012/22**

(51) Int Cl.:
***G05B 19/12*** *(2006.01)*

(21) Anmeldenummer: **11008573.5**

(22) Anmeldetag: **26.10.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **25.11.2010 DE 102010052576**

(71) Anmelder: **Robert Bosch GmbH**
**70442 Stuttgart (DE)**

(72) Erfinder:
• **Schultze, Stephan**
**97816 Lohr am Main (DE)**
• **Schnabel, Holger**
**97209 Veitshoechheim (DE)**

(74) Vertreter: **Thürer, Andreas**
**Bosch Rexorth AG**
**Zum Eisengießer 1**
**97816 Lohr am Main (DE)**

(54) **Verfahren zur Registerregelung mehrerer Bearbeitungseinrichtungen unter Verwendung eines einzigen Registersensor sowie einer einzigen Registerregeleinheit**

(57) Die Erfindung betrifft ein Verfahren zur Längsregisterregelung mehrerer Bearbeitungseinrichtungen (110, 120) unter Verwendung eines einzigen Registersensors (130) sowie einer einzigen Registerregeleinheit (150), wobei mittels des Registersensors (130) je wenigstens ein Messwert für eine Bahn/Bahn-Korrektur wenigstens einer ersten Bearbeitungseinrichtung (110) und eine Bahn/Zylinder-Korrektur wenigstens einer zweiten Bearbeitungseinrichtung (120) erfasst und an die Registerregeleinheit (150) übertragen werden, wobei von der Registerregeleinheit (150) auf Grundlage des je wenigstens einen Messwerts sowohl je wenigstens ein Korrekturwert für die Bahn/Bahn-Korrektur als auch je wenigstens ein Korrekturwert für die Bahn/Zylinder-Korrektur bestimmt werden und die bestimmten Korrekturwerte für die Längsregisterregelung verwendet werden.

**FIG. 1**

EP 2 458 462 A2

**Beschreibung**

Die vorliegende Erfindung betrifft ein Verfahren zur Registerregelung mehrerer Bearbeitungseinrichtungen unter Verwendung eines einzigen Registersensors sowie einer einzigen Registerregeleinheit.

Stand der Technik

Obwohl nachfolgend hauptsächlich auf die Registerregelung bei Druckmaschinen Bezug genommen wird, ist die Erfindung nicht darauf beschränkt, sondern vielmehr auf alle Arten von Bearbeitungsmaschinen, bei denen ein Bearbeitungsmaterial, bspw. in Form vereinzelter Materialabschnitte oder in Form einer Warenbahn bzw. Materialbahn, bearbeitet wird, gerichtet. Die Erfindung ist insbesondere bei Druckmaschinen, wie z.B. Zeitungsdruckmaschinen, Akzidenzdruckmaschinen, Tiefdruckmaschinen, Verpackungsdruckmaschinen oder Wertpapierdruckmaschinen, sowie bei Bearbeitungsmaschinen wie, z.B. Beutelmaschinen, Briefumschlagsmaschinen oder Verpackungsmaschinen, einsetzbar. Das Bearbeitungsmaterial oder die Warenbahn kann aus Papier, Stoff, Pappe, Kunststoff, Metall, Gummi, in Folienform usw. ausgebildet sein.

Stand der Technik

Bei Bearbeitungsmaschinen, insbesondere Druckmaschinen, wird Material entlang von angetriebenen und nicht angetriebenen Achsen bewegt und bearbeitet. Um die Bearbeitungsschritte aufeinanderfolgender Bearbeitungseinrichtungen zueinander auszurichten, wird eine sogenannte Registerregelung durchgeführt. Dazu werden Markierungen, bspw.

Registermarken, auf dem Material von Sensoren abgetastet, wobei die von den Sensoren erzeugten Erfassungsdaten über einen Schaltausgang (meist 24V) dem übergeordneten System, d.h. einer Steuerung, einem Automatisierungssystem oder einem Antrieb, übermittelt werden. Beispielsweise wird je nach Polarität des Sensorausgangs eine positive Flanke einer Registermarke, d.h. der Anfang der Registermarke, über eine fallende oder steigende Flanke im Signal am Schaltausgang angezeigt. Die negative Flanke der Registermarke, d.h. das Ende der Registermarke, wird durch die entsprechend andere Flanke am Schaltausgang angezeigt.

Das übergeordnete System, an das der Sensor angeschlossen ist, wertet die Flanken aus, wodurch zusammen mit Informationen betreffend die Transportgeschwindigkeit die Länge und Breite und die Position der Registermarken auf dem Material bestimmt werden kann. Diese Information wird dann zur Korrektur der Bearbeitungseinrichtung verwendet.

Eine Möglichkeit zur Charakterisierung von bekannten Registerregelverfahren liegt in der Betrachtung der Bezugsgrößen, die für die Ermittlung der Abweichung der Lagen der Teilbilder von ihren Solllagen herangezogen werden. Es wird zwischen Bahn/Bahn-Verfahren und Bahn/Zylinder-Verfahren unterschieden.

Bei einem Bahn/Zylinder-Verfahren werden beim Durchlauf der Warenbahn die Position einer Referenzmarke und die Winkelposition der zu korrigierenden Bearbeitungseinheit (Druckzylinder, Querschneider usw.) (bspw. ermittelt durch einen Drehgeber) verglichen. Bei einem BahnBahn-Verfahren werden beim Durchlauf der Warenbahn die Positionen einer Referenzmarke und die Position einer von der zu korrigierenden Bearbeitungseinheit aufgebrachten Marke verglichen. In beiden Fällen kann eine jeweilige Registerabweichung berechnet und zur Korrektur verwendet werden. Die festgestellte Registerabweichung wird zur Positionierung der Bearbeitungseinheit verwendet. Das Bahn/Zylinder-Verfahren wird normalerweise eingesetzt, wenn die zu korrigierende Bearbeitungseinheit keine (z.B. Rotationsstanze) oder nur farb- und kontrastarme (z.B. Lackierwerk) Registermarken druckt.

Es ist wünschenswert, den gerätetechnischen Aufwand für die Registerregelung einer Bearbeitungsmaschine zu reduzieren.

Offenbarung der Erfindung

Erfindungsgemäß wird ein Verfahren zur Registerregelung mehrerer Bearbeitungseinrichtungen unter Verwendung eines einzigen Registersensors sowie einer einzigen Registerregeleinheit mit den Merkmalen des Patentanspruchs 1 vorgeschlagen. Vorteilhafte Ausgestaltungen sind Gegenstand der Unteransprüche sowie der nachfolgenden Beschreibung.

Vorteile der Erfindung

Die Erfindung beruht auf der Erkenntnis, dass in einer Vielzahl aller Fälle die Registerregelungen innerhalb einer Bearbeitungsmaschine mit nur einem einzigen Registersensor und nur einer einzigen Registerregeleinrichtung auskommen, und dabei selbst unterschiedliche Korrekturverfahren, nämlich sowohl eine Bahn/Bahn-Korrektur als auch eine Bahn/Zylinder-Korrektur, möglich sind. Dadurch kann der gerätetechnische Aufwand für die Registerregelung einer Bearbeitungsmaschine erheblich reduziert werden, da eine Vielzahl von Sensoren und zusätzliche Registerregeleinrichtungen eingespart werden können. Es kann ebenfalls gleichzeitig das Längs- und das Seitenregister geregelt werden.

Vorzugsweise wird eine Registermarke von jedem Druckwerk auf die Materialbahn (Rand oder Druckbereich) gedruckt, um die Position des Teildruckbilds im Gesamtdruckbild vermessen zu können. Alternativ kann auch das Druckbild selbst herangezogen werden, wenn der Registersensor bspw. als Kamera ausgebildet ist. Besitzen die Registermarken einen vorgegebenen Abstand zueinander, so ist das Gesamtdruckbild deckungsgleich übereinander gedruckt. Treten Abweichungen des Sollabstands auf, besteht die Gefahr der Makulatur und die Registerregelung greift ein. Die Erfindung bietet die Möglichkeit, gleichzeitig eine Anzahl n Druckwerke mit einer Bahn/Bahn- und eine Anzahl m Druckwerke mit einer Bahn/Zylinderregelung mit nur einem Registersensor zu regeln.

Als Messwerte werden vorzugsweise ein absoluter oder relativer (=Differenz) Positionswert und/oder ein absoluter oder relativer (=Differenz) Zeitpunkt erfasst und übertragen. Absolute Werte lassen sich besonders bevorzugt bestimmen, wenn dem Registersensor entsprechende Referenzwerte zugeführt werden, bspw. Leitachsinformationen und/oder Geschwindigkeitsinformationen und/oder Beschleunigungsinformationen und/oder Zeitinformationen. Werden Zeitinformationen gemessen und an die Regelung übertragen, ist eine zeitliche Synchronisation zwischen Sensor-Zeitbasis und Regelungs-Zeitbasis sinnvoll (z.B. zur Umrechnung von absoluten Zeitpunkten zu absoluten Positionsinformationen).

Ansonsten sollten nur relative Zeitinformationen, wie z.B. zeitlicher Abstand von zwei Druckmarken oder zeitliche Breite einer Druckmarke, übermittelt werden. Für die Erfindung kann demnach vorzugsweise ein "intelligenter" Sensor verwendet werden, wie er bspw. in der DE 10 2007 049 679 A1 offenbart ist. Dieser Sensor kann der einzigen Regelungseinrichtung Berechnungsvorgänge abnehmen, so dass der Rechenkapazitätsbedarf der Regelungseinrichtung sinkt. Mit dieser Lösung werden absolute Markierungsdaten, insbesondere Registermarkenabstände für eine Regelung des Längsregisters und/oder die Registermarkenbreiten für eine Regelung des Seitenregisters, bereits innerhalb des Sensors hoch genau bestimmt und können anschließend direkt der Registerregelungseinrichtung zugeführt werden. Die Auswertung der zu vermessenden Markierungen findet direkt im Sensorsystem statt, was die Registerregelungseinrichtung entlastet.

Die Übertragung der Messwerte für die Bahn/Bahn-Korrektur erfolgt zweckmäßigerweise über ein Standard-Ethernet oder einen beliebigen Echtzeitbus. Vorzugsweise werden der je wenigstens eine Messwert für die Bahn/Bahn-Korrektur und der je wenigstens eine Messwert für die Bahn/Zylinder-Korrektur gemeinsam in einer einzigen Übertragung an die Registerregeleinheit übertragen. Alternativ oder zusätzlich können die Messwerte für die Bahn/Zylinder-Korrektur auch über ein Schaltsignal (z.B. 24 V) an ein Antriebs- oder Steuerungssystem (z.B. Messtasterfunktion) übertragen werden.

Zweckmäßigerweise wird zusätzlich eine Farbmessung der aufgedruckten Registermarken durchgeführt. Somit entfällt weiterhin noch die Messeinrichtung für die Farbmessung in der Maschine. Der Registersensor erfasst die Farben in dem Registermarkenstrom und gibt die Abweichungen (z.B. den Farbabstand) zu einem eingelernten Referenzprodukt oder kalibrierte absolute Farbdaten ("Weißabgleich") zurück. Somit kann über eine Regelung ebenfalls die Farbe geregelt werden.

Zweckmäßigerweise wird neben einer Längsregisterregelung auch zusätzlich eine Seitenregisterregelung durchgeführt. Hierzu werden auch die Markenbreiten an die Registerregeleinheit übertragen. Durch den Vergleich der Markenbreiten mit einem Sollwert kann eine Seitenregisterabweichung berechnet und über die entsprechenden Regelungsalgorithmen ausgeregelt werden. Somit kann mit nur einem Registersensor eine Längs- und Seitenregisterregelung durchgerührt werden.

Bei langen Bahnwegen vor einer Bahn/Bahn-Regelung kann die Prozessstabilität durch unterlagerte Bahn/Zylinder-Regelungen verbessert werden. Hierbei wird dann von der überlagerten Bahn/Bahn-Regelung nur der Sollwert des unterlagerten Bahn/Zylinder-Regelkreises verändert.

Eine erfindungsgemäße Recheneinheit, z.B. ein Steuergerät einer Druckmaschine, ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1  zeigt eine schematische Darstellung einer ersten als Druckmaschine ausgebildeten Bearbeitungsmaschine zur Durchführung einer Ausführungsform der Erfindung.

Figur 2  zeigt eine schematische Darstellung einer zweiten als Druckmaschine ausgebildeten Bearbeitungsmaschine zur Durchführung einer Ausführungsform der Erfindung.

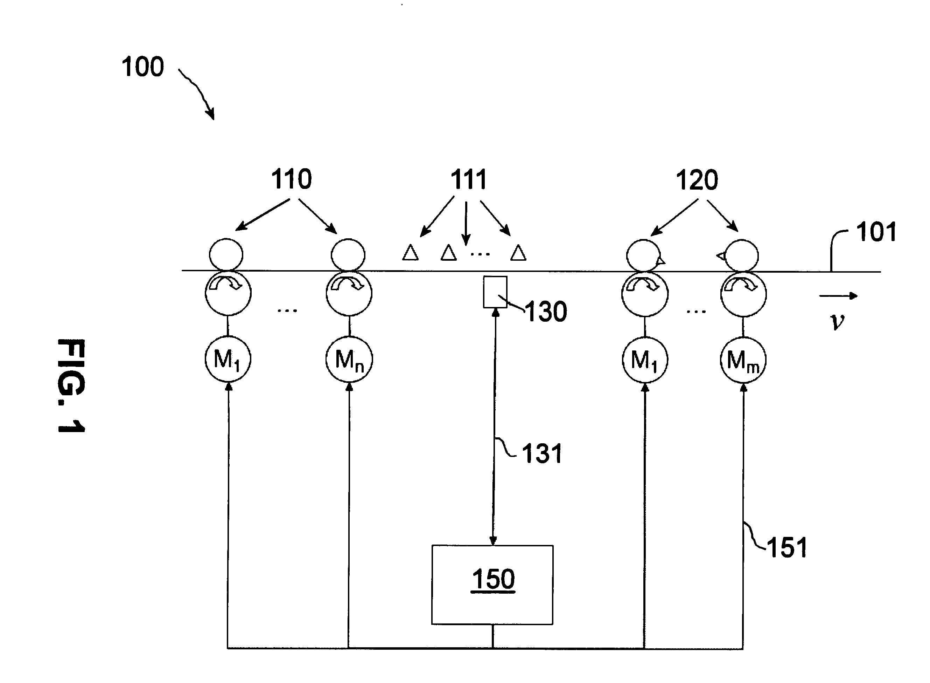

In Figur 1 ist eine erste als Druckmaschine ausgestaltete Bearbeitungsmaschine insgesamt mit 100 bezeichnet. Ein Bedruckmaterial, beispielsweise Papier 101, wird durch eine Anzahl n als Druckwerke 110 ausgebildete erste Bearbeitungseinrichtungen geführt und bedruckt. Von jedem der Druckwerke 110 wird auch eine Registermarke 111 auf das Papier aufgedruckt. Da die Registermarken einfach zu erfassen sind, ist für die ersten Bearbeitungseinrichtungen 110 eine Bahn/Bahn-Korrektur vorgesehen. Das Papier 101 wird anschließend durch eine Anzahl von m zweiten Bearbeitungseinrichtungen 120 geführt und bearbeitet. Bei den zweiten Bearbeitungseinrichtungen 120 handelt es sich bspw. um Lackierwerke, Stanzen u.ä., die keine oder keine leicht erfassbaren Registermarken auf das Papier 101 aufbringen können. Deshalb ist für die zweiten Bearbeitungseinrichtungen 120 eine Bahn/Zylinder-Korrektur vorgesehen. Für die Durchführung der Längsregisterregelung ist eine Registerregeleinrichtung 150 vorgesehen. Die Registerregeleinrichtung 150 verfügt über geeignete Regelglieder, wie z.B. PID-Glieder usw.

Die Bearbeitungseinrichtungen 110, 120 sind jeweils über einen mit M bezeichneten Antrieb einzeln und unabhängig angetrieben. Die Antriebe der einzelnen Bearbeitungseinrichtungen 110, 120 sind über eine Datenverbindung 151 mit der Steuerung 150 verbunden.

Der einzige für die Erfindung verwendete Registersensor ist mit 130 bezeichnet und mittig in der Bearbeitungsmaschine angeordnet. Der Registersensor 130 ist über eine Datenverbindung 131, bspw. eine Ethernet-Verbindung, mit der Registerregeleinrichtung 150 verbunden. Über die Datenverbindung 131 werden die Messwerte von dem Registersensor 130 an die Registerregeleinrichtung 150 übertragen. Es kann daneben vorgesehen sein, Referenzinformationen von der Registerregeleinrichtung 150 an den Registersensor 130 zu übertragen.

Die Position des Registersensors 130 wird so gewählt, dass er nach den ersten Bearbeitungseinrichtungen 110 angeordnet ist, für die eine Bahn/Bahn-Korrektur durchgeführt wird. Somit können von dem Registersensor 130 alle zuvor aufgedruckten Registermarken 111 1 erfasst werden. Für die Bahn/Zylinder-Korrektur wird die Position einer Referenzmarke mit der Position der zu korrigierenden Bearbeitungseinrichtung verglichen. Der Erfassungsort für die Referenzmarke kann daher relativ frei gewählt werden, solange er sich hinter dem Druckwerk befindet, das die Referenzmarke aufbringt. Im vorliegenden Ausführungsbeispiel wird der Registersensor 130 vor den zweiten Bearbeitungseinrichtungen 120 für die Bahn/Zylinderkorrektur angeordnet, um insgesamt die Summe der Abstände (und in der Folge Totzeiten: Zeit zwischen Bearbeitung und Messung) möglichst gering zu halten. Diese mittige Anordnung ist besonders zweckmäßig, da in der Praxis regelmäßig die Druckwerke vor den sonstigen Bearbeitungseinrichtungen angeordnet sind.

Zusätzlich zur Darstellung in Figur 1 können auch Bearbeitungsstationen mit Bahn/Zylinderkorrektur vor dem Sensor angebracht sein.

Nachfolgend wird beschrieben, wie bei der dargestellten Druckmaschine eine Registerregelung durchgeführt wird. Für einen registerhaltigen Druck müssen die von den Druckwerken 110 gedruckten Teilbilder positionsrichtig übereinander liegen. Weiterhin müssen die Bearbeitungspositionen der zweiten Bearbeitungseinrichtungen 120 positionsrichtig zum Druckbild ausgeführt werden.

Zur Bestimmung der Bearbeitungslage (Drucklage) der Teilbilder wird —wie erwähnt — mit jedem Teilbild eine Registermarke 111 gedruckt. Diese Registermarken werden von dem Registersensor 130 erfasst und an die Registerregeleinrichtung 150 übermittelt.

Die Registerregeleinrichtung bestimmt aus den übermittelten Messwerten (örtliche und/oder zeitliche Markenpositionen und ggf. Markenabstände) Korrekturwerte sowohl für die Druckwerke 110 als auch für die zweiten Bearbeitungseinrichtungen 120. Für die Bestimmung der Korrekturwerte für die Bahn/Bahn-Korrektur vergleicht die Registerregeleinrichtung 150 die Markenabstände mit Sollwerten und bestimmt aus einer Abweichung die Korrekturwerte. Für die Bestimmung der Korrekturwerte für die Bahn/Zylinder-Korrektur vergleicht die Registerregeleinrichtung 150 die Position einer Referenzmarke mit der Winkelposition der jeweils zu korrigierenden Bearbeitungseinrichtung 120. Hierzu wird die Positionsinformation der Registermarke bspw. in Bezug auf den Nullimpuls der Leitachse zurückgegeben. Unter Berücksichtigung des Winkeloffsets in Bezug zur Leitachsposition kann die entsprechende Istposition der Registermarke zur Bearbeitungsachse berechnet werden. Somit ergibt sich die Berechnung der Registerabweichung für die Bahn/Zylinderregelung aus folgender Formel:

$$y_{BZ} = \omega_{\mathrm{Re\,gimarkeBearbeitung}} - \left(Pos_{\mathrm{Re\,gimarkeLeitachse}} + \varphi_{OffsetBearbeitung}\right)$$

$Y_{BZ:}$ Registerabweichung der Bahn/Zylinderregelung

$\omega_{RegimarkeBearbeitung}$ : Sollwert der Referenzregistermarkenposition der Bearbeitungsachse

$Pos_{RegimarkeLeitachse}$ : Gemessene Leitachsposition der Referenzregistermarke

$\varphi_{OffsetBearbeirung}$ : Winkeloffset der Bearbeitungsachse in Bezug auf die Leitachse

Aus der Tatsache, dass die Druckwerke 110 unterschiedliche Entfernungen zum Registersensor 130 haben, ergeben sich Auswirkungen auf die Regelperformance. Bspw. wird eine Verstellung an Druckwerk 1 deutlich später erfasst als eine Verstellung an Druckwerk n. Für diese Problemstellung gibt wird folgende Lösung vorgeschlagen:

Es kann vorgesehen sein, dass automatisch für die Druckwerke 110 Reglerparameter (z.B. P-Anteil, 1-Anteil, D-Anteil usw.) bestimmt werden, welche eine geschwindigkeitsabhängige Totzeit d/v berücksichtigen, wobei d der Abstand des jeweiligen Druckwerks vom Registersensor Sensor und v die Materialbahngeschwindigkeit ist. D.h. je weiter das Druckwerk vom Sensor entfernt ist, desto schwächer werden die gewählten Reglerparameter. Bevorzugt eignen sich Verfahren, wie sie in der DE 10 2008 035 639 A1 beschrieben sind.

Bei der Bahn/Bahn-Korrektur werden die Totzeiten, die durch die unterschiedlichen Abstände der Druckwerke vom Sensor entstehen, berücksichtigt und kompensiert. Die Kompensation kann exakt oder in Abhängigkeit von den Abständen der Formate erfolgen:

$$x_{Formate} = \frac{d_i}{U}$$

wobei $d_i$ der Abstand des zu korrigierenden Druckwerks vom Registersensor und U der Druckzylinderumfang des zu korrigierenden Druckwerks ist. Es ist zweckmäßig, Vorsteuerungen usw. in Abhängigkeiten von Formaten zu berechnen, da pro Umdrehung (=Format) normalerweise ein Messwert erfasst und von der Registerregeleinheit eine neue Stellgröße bestimmt wird.

Zur Berücksichtigung der Totzeiten bei nachfolgenden Bearbeitungsachsen mit Bahn/Zylinder-Korrektur wird ebenfalls eine Totzeitkompensation durchgeführt, die wiederum exakt bzw. formatbezogen (siehe oben) erfolgen kann.

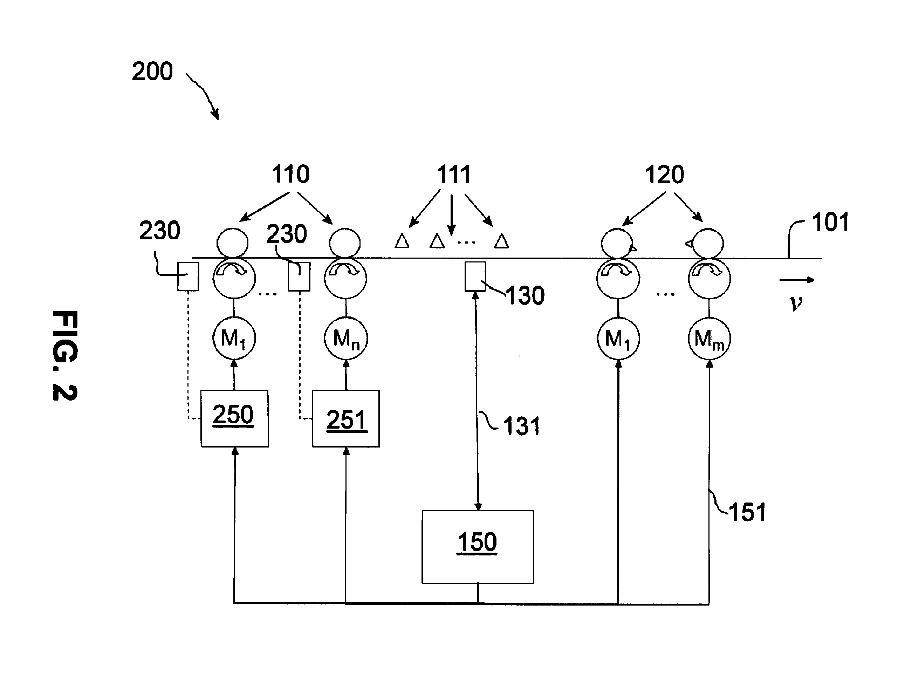

In Figur 2 ist eine zweite als Druckmaschine ausgestaltete Bearbeitungsmaschine insgesamt mit 200 bezeichnet. Elemente, die denen aus Figur 1 gleichen, sind mit gleichen Bezugszeichen versehen und werden nicht erneut beschrieben.

Die Druckmaschine 200 unterscheidet sich von der Druckmaschine 100 gemäß Figur 1 dadurch, dass der Bahn/Bahn-Korrektur für die Druckwerke 110 eine Bahn/Zylinder-Korrektur unterlagert ist. Dafür sind zusätzliche Registersensoren 230 und zusätzliche Registerregeleinrichtungen 250, 251 vorgesehen. Die Registerregeleinrichtungen 250, 251 sind hier zwar separat abgebildet, können jedoch auch von der Registerregeleinrichtung 150 umfasst sein.

Von der Registerregeleinrichtung 150 werden als Korrekturwerte weiterhin die Stellwerte für die zweiten Bearbeitungseinrichtungen 120 ausgegeben. Für die Druckwerke 110 werden als Korrekturwerte nun jedoch nicht mehr Stellwerte, sondern Sollwerte für die Registerregeleinrichtungen 250, 251 ausgegeben. Sind die Registerregeleinrichtungen 250, 251 1 Teil der Registerregeleinrichtung 150, so erfolgt dies intern und bei den ausgegebenen Werten handelt es sich dann im Endeffekt wieder um Stellwerte.

Neben den in den Figuren dargestellten Ausfiihrungsformen werden auch Ausführungsformen vorgeschlagen, bei denen der Registersensor hinter den zweiten Bearbeitungseinrichtungen angeordnet ist. Auch können mehrere Registersensoren in einer Maschine vorgesehen sein, die gleichzeitig Bahn/Bahn- und Bahn/Zylindermessungen durchführen.

**Patentansprüche**

1. Verfahren zur Längsregisterregelung mehrerer Bearbeitungseinrichtungen (110, 120) unter Verwendung eines einzigen Registersensors (130) sowie einer einzigen Registerregeleinheit (150), wobei mittels des Registersensors (130) je wenigstens ein Messwert für eine Bahn/Bahn-Korrektur wenigstens einer ersten Bearbeitungseinrichtung (110) und eine Bahn/Zylinder-Korrektur wenigstens einer zweiten Bearbeitungseinrichtung (120) erfasst und an die Registerregeleinheit (150) übertragen werden,
wobei von der Registerregeleinheit (150) auf Grundlage des je wenigstens einen Messwerts sowohl je wenigstens ein Korrekturwert für die Bahn/Bahn-Korrektur als auch je wenigstens ein Korrekturwert für die Bahn/Zylinder-Korrektur bestimmt werden und die bestimmten Korrekturwerte für die Längsregisterregelung verwendet werden.

2. Verfahren nach Anspruch 1, wobei als Messwert ein absoluter oder relativer Positionswert, ein absoluter oder relativer Zeitpunkt erfasst und übertragen wird.

3. Verfahren nach Anspruch 1 oder 2, wobei dem Registersensor (130) Leitachsinformationen und/oder Geschwindigkeitsinformationen und/oder Beschleunigungsinformationen und/oder Zeitinformationen als Referenzwerte zugeführt werden und der Registersensor (130) als Messwert für die Bahn/Bahn-Korrektur und/oder als Messwert für die Bahn/Zylinder-Korrektur die Position oder den Zeitpunkt einer Registermarke (111) relativ zur Referenzinformation bestimmt und überträgt.

4. Verfahren nach einem der vorstehenden Ansprüche, wobei der je wenigstens eine Messwert für die Bahn/Bahn-Korrektur und der je wenigstens eine Messwert für die Bahn/Zylinder-Korrektur gemeinsam in einer einzigen Übertragung an die Registerregeleinheit (150) übertragen werden.

5. Verfahren nach einem der vorstehenden Ansprüche, wobei wenigstens einer der Korrekturwerte als Stellwert an die jeweilige zu korrigierende Bearbeitungseinrichtung (110, 120) übertragen wird.

6. Verfahren nach einem der vorstehenden Ansprüche, wobei wenigstens einer der Korrekturwerte für die Bahn/Bahn-Korrektur als Sollwert an eine der Bahn/Bahn-Korrektur für die jeweilige zu korrigierende Bearbeitungseinrichtung (110) unterlagerte Bahn/Zylinder-Korrektur übertragen wird.

7. Verfahren nach einem der vorstehenden Ansprüche, wobei mittels des Registersensors (130) zusätzlich eine Farbmessung durchgeführt wird.

8. Verfahren nach einem der vorstehenden Ansprüche, wobei automatisch für wenigstens eine zu korrigierende Bearbeitungseinrichtung (110, 120) Reglerparameter bestimmt werden, welche eine geschwindigkeitsabhängige Totzeit berücksichtigen.

9. Verfahren nach einem der vorstehenden Ansprüche, wobei der Registersensor (130) im Warenbahnverlauf hinter der wenigstens einen ersten Bearbeitungseinrichtung (110) angeordnet ist.

10. Verfahren nach einem der vorstehenden Ansprüche, wobei der Registersensor (130) im Warenbahnverlauf vor der wenigstens einen zweiten Bearbeitungseinrichtung (120) angeordnet ist.

11. Verfahren nach einem der vorstehenden Ansprüche, wobei zusätzlich eine Seitenregisterregelung durchgeführt wird und Messwerte für die eine Seitenregisterregelung ebenfalls von dem Registersensor (130) erfasst werden.

12. Recheneinheit (150), die dazu eingerichtet ist, ein Verfahren nach einem der vorstehenden Ansprüche durchzuführen.

FIG. 1

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007049679 A1
- DE 102008035639 A1